## Europäisches Patentamt
## European Patent Office
## Office européen des brevets

(11) Veröffentlichungsnummer: **0 224 106**
**A1**

(12) # EUROPÄISCHE PATENTANMELDUNG

(21) Anmeldenummer: **86115552.1**

(22) Anmeldetag: **10.11.86**

(51) Int. Cl.⁴: **A 23 L 1/236**

(30) Priorität: 22.11.85 DE 3541302

(43) Veröffentlichungstag der Anmeldung:
03.06.87 Patentblatt 87/23

(84) Benannte Vertragsstaaten:
AT CH DE FR GB IT LI NL SE

(71) Anmelder: **Merck Patent Gesellschaft mit beschränkter Haftung**
**Frankfurter Strasse 250**
**D-6100 Darmstadt(DE)**

(72) Erfinder: **Vogel, Roland, Dr.**
**Hebbelstrasse 4**
**D-6100 Darmstadt(DE)**

(72) Erfinder: **Schmidt, Peter, Prof. Dr.**
**Am Hasenküppel 31**
**D-3550 Marburg(DE)**

(72) Erfinder: **Reiff, Friedrich, Dr.**
**Im Rassdorf 1**
**D-6104 Seeheim 1(DE)**

(72) Erfinder: **Basedow, Arno, Dr.**
**Elisabethenstrasse 25**
**D-6328 Bad Vilbel(DE)**

(72) Erfinder: **Möschl, Gernot A.**
**Falltorstrasse 20**
**D-6108 Weiterstadt(DE)**

(54) **Süssmittel.**

(57) Die Erfindung betrifft ein neues Süßmittel, das 80 bis 99,9 Gewichtsprozent eines Sorbits mit folgenden Eigenschaften:

a) eine Schüttdichte (nach DIN 53912) von 0,3 bis 0,6 g/ml,
b) einen γ-Sorbitgehalt von mindestens 90 %,
c) eine spezifische Oberfläche (nach BET) von 0,7 bis 1,5 m²/g,

und 0,1 bis 20 Gewichtsprozent Aspartam in Form eines stabilen Adsorbats enthält.

EP 0 224 106 A1

Croydon Printing Company Ltd

- 1 -

Merck Patent Gesellschaft
mit beschränkter Haftung

6100 D a r m s t a d t

Süßmittel

Die Erfindung betrifft ein neues Süßmittel, das Sorbit
und Aspartam in Form eines stabilen Adsorbats enthält.

Süßmittel, die Aspartam (L-α-Asparagyl-L-phenylalanin-methylester) und nichttoxische Träger enthalten, sind
aus der DE-PS 16 92 768 bekannt. Dort ist auch Sorbit
als möglicher Trägerstoff erwähnt.

Diese bekannten Süßmittel zeigen Nachteile, z.B. schlechte
Rieselfähigkeit, Neigung einerseits zum Stauben, andererseits zum Klumpen, unbefriedigende Lösegeschwindigkeit
sowie leichte Entmischbarkeit.

Aufgabe der Erfindung war es, neue aspartamhaltige Süßmittel aufzufinden, die die Nachteile der bekannten Süßmittel nicht oder nur in geringerem Ausmaß aufweisen.

Es wurde gefunden, daß man besonders vorteilhafte Süßmittel erhält, wenn man als Trägerstoff einen Sorbit
mit besonderen Eigenschaften verwendet. Diese Süßmittel
liegen in Form von stabilen Adsorbaten vor, die praktisch nicht entmischbar sind, eine gute Rieselfähigkeit
besitzen, praktisch nicht stauben, andererseits nicht
zur Verklumpung neigen und sich gut dosieren lassen.

- 2 -

Für eine praktische Anwendung besonders vorteilhaft ist die hohe Lösungsgeschwindigkeit der neuen Adsorbate in Wasser; sie ist etwa 30 bis 100mal so hoch die diejenige von reinem Aspartam gleicher Korngröße und etwa 1,5 bis 2mal so hoch wie diejenige eines entsprechenden Präparats mit herkömmlichem Sorbit.

Gegenstand der Erfindung ist ein Süßmittel, dadurch gekennzeichnet, daß es 80 bis 99,9 Gewichtsprozent eines Sorbits mit folgenden Eigenschaften:

a)   eine Schüttdichte (nach DIN 53912) von 0,3 bis 0,6 g/ml,

b)   einen γ-Sorbitgehalt von mindestens 90 %,

c)   eine spezifische Oberfläche (nach BET) von 0,7 bis 1,5 m²/g,

und 0,1 bis 20 Gewichtsprozent Aspartam in Form eines stabilen Adsorbats enthält.

Sorbit mit den vorstehend angegebenen Eigenschaften (nachstehend als "SORBIT" bezeichnet) kann z.B. durch Sprühtrocknung von wässerigen Lösungen des (herkömmlichen) Sorbits erhalten werden. Ein besonders bevorzugter SORBIT ist in der DE-OS 32 45 170 beschrieben. SORBIT hat eine Schüttdichte (nach DIN 53912) von 0,3 bis 0,6, vorzugsweise 0,35 bis 0,45, insbesondere etwa 0,4 g/ml, einen γ-Sorbitgehalt von mindestens 90 %, eine spezifische Oberfläche (nach BET) von 0,7 bis 1,5, vorzugsweise 0,8 bis 1,3, insbesondere 0,9 bis 1,1 m²/g. Bevorzugt hat SORBIT einen Schmelzpunkt oberhalb 90°. Im übrigen braucht SORBIT chemisch nicht extrem rein zu sein; so
ist ein Gehalt von bis zu etwa 8 % anderer Zuckeralkohole, insbesondere Mannit, nicht schädlich. Die Korngröße der SORBIT-Teilchen liegt vorzugsweise zwischen
etwa 75 und 1000 µm, insbesondere zwischen etwa 150 und
800 µm, der Wassergehalt des SORBITs vorzugsweise zwischen etwa 0,3 und 1 %.

Gegenstand der Erfindung ist ferner ein Verfahren zur
Herstellung eines Süßmittels, dadurch gekennzeichnet,
daß man 0,1 bis 20 % Aspartam in 80 bis 99,9 % SORBIT
unter Bildung eines stabilen Adsorbats einarbeitet.

Überraschenderweise bildet Aspartam mit SORBIT schon
beim mechanischen Einarbeiten mit Hilfe eines der üblichen Mischer ein stabiles Adsorbat, wobei die Einarbeitungszeit zweckmäßig zwischen 15 und 120, vorzugsweise zwischen 20 und 80 Minuten liegt. Als Mischer
eignen sich beispielsweise Kegelschnecken-, Rotationsschaufel- oder V-Mischer. Zur Herstellung des Adsorbats
ist also keine Feuchtgranulation erforderlich, im Gegensatz zur Herstellung bekannter Aspartam-Zubereitungen,
die Trägerstoffe enthalten.

Das erfindungsgemäß zu verwendende Aspartam liegt zweckmäßig in Pulverform vor, wobei die Korngröße nicht kritisch ist. Es ist jedoch zweckmäßig, ein Produkt mit niedriger Korngröße zu verwenden, insbesondere, wenn der Aspartamgehalt in dem Adsorbat hoch sein soll. So sind z.B.
bei Aspartamgehalten bis zu etwa 2 % Korngrößen von 90 %
unter 50 µm, bei Gehalten bis zu etwa 6 % Korngrößen von
90 % unter 20 µm, bei Gehalten bis zu 20 % Korngrößen von
90 % unter 10 µm bevorzugt.

Bevorzugt sind dementsprechend Adsorbate, die aus relativ großen SORBIT-Teilchen und relativ kleinen Aspartam-Teilchen erhältlich sind. In ihnen sind die Aspartam-Partikel an der Oberfläche der SORBIT-Partikel adsorbiert. Insofern unterscheiden sich die erfindungsgemäßen Adsorbate von Produkten, die durch Versprühen einer Lösung, die sowohl Aspartam als auch Sorbit enthält, herstellbar sind und in denen das Aspartam homogen im erhaltenen Gemisch verteilt ist.

Zusätzlich zu Aspartam und SORBIT können die erfindungsgemäßen Adsorbate etwa bis zu 15 % physiologisch unbedenkliche Zusatzstoffe enthalten, z.B. Salze wie Natriumchlorid oder Magnesiumstearat, Vitamine wie Vitamin A, B1, B2, B6, B12, C, D, E, Pantothensäure und deren Salze, Nicotinsäureamid, Folsäure, Biotin, Säuren wie Citronen-, Fumar- oder Weinsäure, Aromastoffe, Farbstoffe.

Die Adsorbate können direkt als gut rieselfähiger Zuckerersatz verwendet werden, der auch für Diabetiker geeignet ist. Sie können auch direkt tablettiert werden oder zu lockeren Komprimaten ähnlich Würfelzucker verarbeitet werden. Wenn bei der Tablettierung neben einer oder mehreren der genannten Säuren auch Carbonate wie Natriumbicarbonat zugesetzt werden, lassen sich Brausetabletten herstellen.

Vor- und nachstehend bedeuten alle %-Angaben Gewichtsprozente.

Beispiel 1

In einer Schlagkreuzmühle werden 3 kg Aspartam auf eine Kornfeinheit von ca. 90 % unter 50 µm gemahlen und in einen Kegelschneckenmischer gesiebt, in dem sich 500 kg SORBIT befinden. Man setzt nochmals 497 kg SORBIT hinzu, mischt 1 Std. lang und erhält ein lockeres, praktisch staubfreies Adsorbat mit etwa der gleichen Süßkraft wie Saccharose; es enthält 0,3 % Aspartam.

Beispiel 2

Über eine schnell laufende Stiftmühle werden bei relativ geringem Durchsatz ein Gemisch von 10 kg Natriumchlorid und 60 kg Aspartam auf eine Kornfeinheit von ca. 90 % unter 20 µm gemahlen und in einen Rotationsschaufelmischer gesiebt, in dem sich 500 kg SORBIT befinden. Man setzt nochmals 430 kg SORBIT hinzu, mischt 30 Min. lang und erhält ein gut rieselfähiges, schnell wasserlösliches Adsorbat mit etwa der zehnfachen Süßkraft von Saccharose, das 6 % Aspartam enthält.

Beispiel 3

Man mikronisiert 150 kg Aspartam mit Hilfe einer Luftstrahlmühle (mit vorgeschalteter Abtrennung der bereits staubfeinen Anteile mittels eines Windsichters) auf eine Korngröße von ca. 90 % unter 10 µm und siebt es in einen laufenden V-Mischer, der bereits 500 kg SORBIT enthält. Man setzt nochmals 350 kg SORBIT hinzu, mischt 1 Std. lang und erhält ein kaum staubendes gut rieselfähiges Adsorbat, das etwa die 25fache Süßkraft von Saccharose besitzt und 15 % Aspartam enthält.

Beispiel 4

5 kg Aspartam, 0,5 kg Thiaminhydrochlorid, 0,5 kg Riboflavin, 0,5 kg Pyridoxinhydrochlorid, 1,5 kg Cyanocobalamin-Konzentrat (0,1%ig auf Lactose-Basis), 3,5 kg Nicotinsäureamid, 2,5 kg Calciumpantothenat, 0,15 kg Folsäure, 0,05 kg Biotin, 23,8 kg Ascorbinsäure, 7 kg α-Tocopherol-acetat (Trockenpulver 50 %; Sprühprodukt auf Gelatine-Lactose-Basis), 2,2 kg Weinsäure und 10 kg Natriumchlorid werden unter Kühlung und Durchleiten von Stickstoff in einer Stiftmühle auf eine Korngröße von ca. 90 % unter 20 µm gemahlen und in einen laufenden V-Mischer gesiebt, in dem sich bereits 500 kg SORBIT befinden. Man gibt 2 kg Farbstoff, 6 kg Zitronenaroma und 410 kg weiteren SORBIT hinzu, mischt 1 Std. lang, gibt dann 5 kg Magnesiumstearat hinzu, mischt weitere 20 Minuten und erhält ein granulatartiges Adsorbat, das 0,5 % Aspartam enthält.

Verwendungsbeispiele:

Beispiel A: Süßstoff-Brausetablette

Eine Tablette enthält

| | |
|---|---|
| SORBIT-Aspartam-Adsorbat mit 12 % Aspartam | 125 mg |
| Natriumhydrogencarbonat | 9 mg |
| Fumarsäure | 6 mg |
| Natriumchlorid | 7 mg |
| Glycin | 3 mg. |

Die gut wasserlösliche, für Diabetiker geeignete Tablette wiegt 150 mg (Durchmesser 7 mm; Höhe ca. 3 mm; Preßdruck 3 kN; Bruchfestigkeit 70 N; Abrieb ca. 0,5 %; Zerfallszeit 3-4 Min.) und hat ein Süßvermögen wie ca. 3 g Saccharose.

Beispiel B: Lutschbares Vitamin-Komprimat

Aus dem nach Beispiel 4 erhaltenen Produkt werden zuckerfreie Vitamin-Komprimate von je 1000 mg Gewicht gepreßt (Durchmesser 16 mm; Höhe 4 mm; Preßdruck 6 kN; Bruchfestigkeit 150 N; Abrieb 0,8 %), die 0,5 % Aspartam enthalten.

Merck Patent Gesellschaft
mit beschränkter Haftung

6100 D a r m s t a d t

Patentansprüche

1. Süßmittel, dadurch gekennzeichnet, daß es 80 bis 99,9 Gewichtsprozent eines Sorbits mit folgenden Eigenschaften:

a) eine Schüttdichte (nach DIN 53912) von 0,3 bis 0,6 g/ml,

b) einen γ-Sorbitgehalt von mindestens 90 %,

c) eine spezifische Oberfläche (nach BET) von 0,7 bis 1,5 m²/g,

und 0,1 bis 20 Gewichtsprozent Aspartam in Form eines stabilen Adsorbats enthält.

2. Verfahren zur Herstellung eines Süßmittels, dadurch gekennzeichnet, daß man 0,1 bis 20 Gewichtsprozent Aspartam in 80 bis 99,9 Gewichtsprozent eines Sorbits mit den in Patentanspruch 1 angegebenen Eigenschaften unter Bildung eines stabilen Adsorbats einarbeitet.

3. Verwendung eines Sorbits mit den in Patentanspruch 1 angegebenen Eigenschaften zur Erhöhung der Lösungsgeschwindigkeit von Aspartam.

PAT LOG 12/5 211185

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| D,Y | DE-A-3 245 170 (MERCK PATENT GMBH) <br> * Ansprüche 1, 2 * | 1 | A 23 L 1/236 |
| Y | CH-A- 646 843 (XYROFIN AG) <br> * Anspruch 1; Seite 2, Zeilen 61-68 * | 1 | |
| D,A | DE-B-1 692 768 (G.D. SEARLE & CO.) <br> * Ansprüche 1-3, Spalte 3, Zeilen 40, 41 * | 1 | |
| A,P | US-A-4 556 565 (T. ARIMA et al.) <br> * Ansprüche 1, 3 * | 1 | |

-----

|  |
|---|
| RECHERCHIERTE SACHGEBIETE (Int. Cl 4) |
| A 23 L 1/00 |

Der vorliegende Recherchenbericht wurde für alle Patentansprüche erstellt.

| Recherchenort <br> BERLIN | Abschlußdatum der Recherche <br> 03-02-1987 | Prüfer <br> SCHULTZE D |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82